# EUROPÄISCHE PATENTSCHRIFT

(11) **EP 1 351 000 B1**
(45) Veröffentlichungstag und Bekanntmachung des Hinweises auf die Patenterteilung: **06.09.2006**
(21) Anmeldenummer: 02020642.1
(22) Anmeldetag: 13.09.2002
(51) Int. Cl.: F16L 9/147, F16L 9/16

(54) **Leitungsrohr für in Kraftfahrzeugen eingesetzte Flüssigkeiten, insbesondere Kraftstoffe und Hydraulikflüssigkeiten**
Conduit for fluids used in motor vehicles, in particular fuel and hydraulic liquids
Conduit pour fluides utilisés dans les véhicules automobiles, en particulier carburants et liquides hydrauliques

(30) Priorität: 05.04.2002 DE 10215169; 26.08.2002 US 228174
(43) Veröffentlichungstag der Anmeldung: 08.10.2003
(73) Patentinhaber: TI Automotive (Fuldabrück) GmbH, 34277 Fuldabrück (DE)
(72) Erfinder: Picco, Pierluigi, 16036 Recco, Genua (IT); Scarrow, Gregory John, 48090 Michigan (US)
(74) Vertreter: Nunnenkamp, Jörg

(56) Entgegenhaltungen:
- US-A- 5 520 223
- US-A- 5 553 640
- US-A- 6 041 827

## Beschreibung

Die Erfindung betrifft ein Leitungsrohr für in Kraftfahrzeugen eingesetzte Flüssigkeiten, insbesondere Kraftstoffe und Hydraulikflüssigkeiten, mit einem metallischen Innenrohr, einer auf der Außenseite des Innenrohres aufgebrachten Aluminiumbeschichtung und einer mit der Aluminiumbeschichtung verbundenen Polyamidschicht.

Bei Leitungsrohren der genannten Art kommt es u. a. darauf an, für hinreichenden Korrosions- und Abrasionsschutz zu sorgen, da derartige Leitungsrohre an der Unterseite von Kraftfahrzeugen zum Einsatz gelangen können. Bei einem aus der Praxis bekannten, druckschriftlich nicht näher belegten Leitungsrohr der genannten Art ist auf der Aluminiumbeschichtung zunächst eine Chromatierungsbeschichtung und anschließend eine Polyamid 11-Pulverbeschichtung als Polyamidschicht aufgebracht. Die Korrosions- und Abrasionsfestigkeit dieses bekannten Leitungsrohres ist jedoch noch verbesserungsfähig.

Die Schrift US-A-6 041 827 beschreibt ein Leitungsrohr mit einem metallischen Innenrohr, einer Aluminiumbeschichtung, einer Chrombeschichtung, und einer aufextrudierten Polyamid 12-Schicht.

Der Erfindung liegt die Aufgabe zugrunde, anzugeben, wie man bei einem Leitungsrohr der eingangs genannten Art eine verbesserte Korrosions- und Abrasionsfestigkeit erreichen kann.

Die erfindungsgemäße Lösung dieser Aufgabe wird durch die Merkmalskombination des Anspruchs 1 erreicht.

Die Erfindung geht hierbei von der Tatsache aus, dass die Kombination von Aluminiumbeschichtung und aufextrudierter Polyamid 12-Schicht überraschenderweise eine wesentlich bessere Abrasionsfestigkeit liefert als bisher. Untersuchungen haben bei dem erfindungsgemäßen Leitungsrohr eine Verbesserung der Abrasionsfestigkeit um mindestens 30 % ergeben.

Für die weitere Ausgestaltung bestehen im Rahmen der Erfindung mehrere Möglichkeiten. So besteht das metallische Innenrohr vorzugsweise aus einem Stahlrohr. Dieses kann insbesondere aus einem einfach, d. h. zu 360° gerollten und auf Längsnaht stumpf verschweißten Rohr, aber auch aus einem doppelt, d. h. zu 720° gerollten und umlaufend verlöteten Rohr bestehen. Für das metallische Innenrohr empfiehlt sich eine Wandstärke von 0,2 bis 8 mm, vorzugsweise 0,4 bis 1,5 mm.

Die Aluminiumschicht ist nach der Erfindung eine hot dip-Beschichtung. Hierbei läuft das Innenrohr durch eine Aluminiumschmelze, die das Rohr von außen benetzt. Überschüssige Schmelze wird durch einen Gasstrahl abgeblasen, mit dem auch die Schichtdicke der Aluminiumschicht beeinflusst werden kann. Die Aluminiumbeschichtung beträgt eine Dicke von 50 bis 200 µm.

Die Polyamid 12-Schicht kann auch elektrostatisch dissipativ ausgerüstet sein, um eine Leitfähigkeit der Innenoberfläche zur Außenoberfläche des Rohres zu gewährleisten. Hierzu empfiehlt es sich, die Polyamid 12-Schicht durch Leitfähigkeitzusätze wie Leitruß, Graphitfibrillen und/oder Carbonfasern, leitfähig zu machen. Für die Polyamid 12-Schicht empfiehlt sich eine Dicke von 50 bis 200 µm, vorzugsweise 100 bis 140 µm.

Gemäß der Erfindung sind der Aluminiumbeschichtung und der Polyamidschicht eine chromfreie Oberflächenbehandlungsschicht, insbesondere eine Phosphatierungsbeschichtung, und eine Primerbeschichtung zwischengeschaltet, um die Korrosion und Haftfestigkeit zwischen Metall und Kunststoff zu erhöhen. Für die chromfreie Oberflächenbehandlungsschicht empfiehlt sich dabei eine Dicke von 0,2 bis 0,8 µm, vorzugsweise kleiner als 0,5 µm. Für die Primerbeschichtung empfiehlt sich eine Dicke von 1 bis 8 µm, vorzugsweise 3 bis 5 µm.

Aus Gründen der mechanischen und thermischen Belastung, z. B. bei Einsatz des Produktes in einem Motorraum oder zur Geräuschminderung kann auf der Außenseite der Polyamid 12-Schicht noch eine Schutzschicht aus einem thermoplastischen Elastomer oder einem Polypropylen aufgebracht sein. Für diese Schutzschicht empfiehlt sich eine Dicke von 1 bis 3 mm, vorzugsweise 1,5 bis 2 mm.

Im Folgenden wird die Erfindung anhand einer ein Ausführungsbeispiel darstellenden Zeichnung näher erläutert.

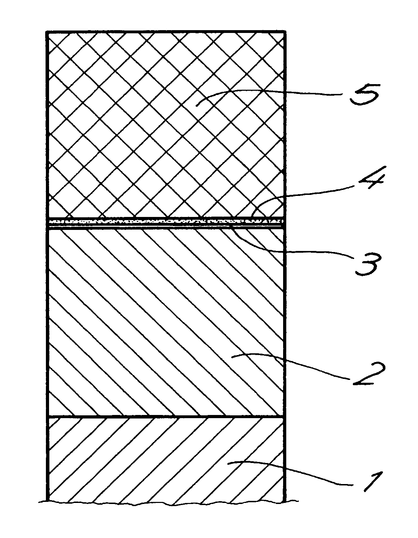

Die einzige Figur zeigt im Querschnitt ein Leitungsrohr.

Das in der Figur dargestellte Leitungsrohr ist für in Kraftfahrzeugen eingesetzte Flüssigkeiten, insbesondere Kraftstoffe und Hydraulikflüssigkeiten bestimmt. Es besteht zunächst aus einem metallischen Innenrohr 1, nämlich einem Stahlrohr in Form eines einfach gerollten und auf Längsnaht stumpf verschweißten Rohres mit einem Außendurchmesser von 4,68 mm und einer Dicke von 0,7 mm. Auf der Außenseite dieses Innenrohres 1 ist eine etwa 120 µm starke hot dip-Aluminiumbeschichtung 2 aufgebracht. Auf dieser Aluminiumbeschichtung 2 befindet sich dann eine chromfreie Oberflächenbehandlungsschicht 3, insbesondere in Form einer Phosphatierungsbeschichtung, die aus einem handelsüblichen Phosphatierungsmittel besteht. Auf der Phosphatierungsbeschichtung ist dann eine 5µm starke Primerbeschichtung 4 aus einem handelsüblichen Nylonprimer aufgebracht. Als abschließende Schicht ist eine Polyamid 12-Schicht 5 von 120 µm aufextrudiert. Nicht dargestellt ist, dass außen noch eine weitere Schutzschicht aus einem thermoplastischen Elastomer oder einem Polypropylen (Dicke etwa 2 mm) vorhanden sein kann.

## Patentansprüche

1. Leitungsrohr für in Kraftfahrzeugen eingesetzte Flüssigkeiten, insbesondere Kraftstoffe und Hydraulikflüssigkeiten,
mit einem metallischen Innenrohr (1),
einer auf der Außenseite des Innenrohres (1) in Form einer hot dip-Beschichtung aufgebrachten Aluminiumbeschichtung (2) mit einer Dicke von 50 bis 200 µm,
einer auf der Aluminiumbeschichtung (2) angeordneten chromfreien Oberflächenbehandlungsschicht (3),
einer auf der chromfreien Oberflächenbehandlungsschicht (3) aufgebrachten Primärbeschichtung (4)
und einer aufextrudierten Polyamid 12-Schicht (5), die über die chromfreie Oberflächenbehandlungsschicht (3) und die Primärbeschichtung (4) mit der Aluminiumbeschichtung (2) verbunden ist.

2. Leitungsrohr nach Anspruch 1, wobei das metallische Innenrohr (1) aus einem Stahlrohr besteht.

3. Leitungsrohr nach Anspruch 1 oder 2, wobei das metallische Innenrohr (1) ein einfach gerolltes und auf Längsnaht stumpf verschweißtes Rohr ist.

4. Leitungsrohr nach Anspruch 1 oder 2, wobei das metallische Innenrohr (1) ein doppelt gerolltes umlaufend verlötetes Rohr ist.

5. Leitungsrohr nach einem der Ansprüche 1 bis 4, wobei das metallische Innenrohr (1) eine Wandstärke von 0,2 bis 8 mm, vorzugsweise 0,4 bis 1,5 mm aufweist.

6. Leitungsrohr nach einem der Ansprüche 1 bis 5, wobei die Aluminiumbeschichtung (2) eine Dicke von 100 bis 140 µm aufweist.

7. Leitungsrohr nach einem der Ansprüche 1 bis 6, wobei die Polyamid 12-Schicht (5) durch Leitfähigkeitszusätze leitfähig gemacht ist.

8. Leitungsrohr nach einem der Ansprüche 1 bis 7, wobei die Polyamid 12-Schicht (5) eine Dicke von 50 bis 200 µm, vorzugsweise 100 bis 140 µm aufweist.

9. Leitungsrohr nach einem der Ansprüche 1 bis 8, wobei die chromfreie Oberflächenbehandlungsschicht (3) aus einer Phosphatierungsbeschichtung besteht.

10. Leitungsrohr nach einem der Ansprüche 1 bis 9, wobei die chromfreie Oberflächenbehandlungsschicht (3) eine Dicke von 0,2 bis 0,8 µm, vorzugsweise kleiner als 0,5 µm aufweist.

11. Leitungsrohr nach einem der Ansprüche 1 bis 10, wobei die Primerbeschichtung (4) eine Dicke von 1 bis 8 µm, vorzugsweise 3 bis 5 µm aufweist.

12. Leitungsrohr nach einem der Ansprüche 1 bis 11, wobei auf der Außenseite der Polyamid 12-Schicht (5) eine Schutzschicht aus einem thermoplastischen Elastomer oder einem Polypropylen aufgebracht ist.

13. Leitungsrohr nach Anspruch 12, wobei die Schutzschicht eine Dicke von 1 bis 3 mm, vorzugsweise 1,5 bis 2 mm aufweist.

## Claims

1. Conduit for fluids used in motor vehicles, in particular fuels and hydraulic fluids,
comprising a metal inner pipe (1),
an aluminium coating (2) with a thickness of 50 to 200 µm which is applied to the outer side of the inner pipe (1) in the form of a hot-dip coating,
a chromium-free surface treatment layer (3) which is arranged on the aluminium coating (2),
a primary coating (4) which is applied to the chromium-free surface treatment layer (3),
and a polyamide 12 layer (5) which is extruded on and which is joined to the aluminium coating (2) via the chromium-free surface treatment layer (3) and the primary coating (4).

2. Conduit according to Claim 1, wherein the metal inner pipe (1) consists of a steel pipe.

3. Conduit according to Claim 1 or 2, wherein the metal inner pipe (1) is a single-rolled pipe which is butt-welded at the longitudinal seam.

4. Conduit according to Claim 1 or 2, wherein the metal inner pipe (1) is a double-rolled pipe which is soldered around its circumference.

5. Conduit according to any of Claims 1 to 4, wherein the metal inner pipe (1) has a wall thickness of 0.2 to 8 mm, preferably 0.4 to 1.5 mm.

6. Conduit according to any of Claims 1 to 5, wherein the aluminium coating (2) has a thickness of 100 to 140 µm.

7. Conduit according to any of Claims 1 to 6, wherein the polyamide 12 layer (5) is made conductive by means of conductivity additives.

8. Conduit according to any of Claims 1 to 7, wherein the polyamide 12 layer (5) has a thickness of 50 to 200 µm, preferably 100 to 140 µm.

9. Conduit according to any of Claims 1 to 8, wherein the chromium-free surface treatment layer (3) consists of a phosphatizing coating.

10. Conduit according to any of Claims 1 to 9, wherein the chromium-free surface treatment layer (3) has a thickness of 0.2 to 0.8 µm, preferably less than 0.5 µm.

11. Conduit according to any of Claims 1 to 10, wherein the primary coating (4) has a thickness of 1 to 8 µm, preferably 3 to 5 µm.

12. Conduit according to any of Claims 1 to 11, wherein a protective layer composed of a thermoplastic elastomer or a polypropylene is applied to the outer side of the polyamide 12 layer (5).

13. Conduit according to Claim 12, wherein the protective layer has a thickness of 1 to 3 mm, preferably 1.5 to 2 mm.

## Revendications

1. Conduite pour des liquides, en particulier des carburants et des fluides hydrauliques, employés dans des véhicules à moteur,
comportant un tube intérieur métallique (1),
un revêtement d'aluminium (2) d'une épaisseur de 50 à 200 µm déposé, sous la forme d'un revêtement au trempé, sur le côté extérieur du tube intérieur (1),
une couche de traitement de surface sans chrome (3), disposée sur le revêtement d'aluminium (2),
un revêtement primaire (4) déposé sur la couche de traitement de surface sans chrome (3)
et une couche de polyamide 12 (5) déposée par extrusion, qui est reliée au revêtement d'aluminium (2) par l'intermédiaire de la couche de traitement de surface sans chrome (3) et du revêtement primaire (4).

2. Conduite selon la revendication 1, dans laquelle le tube intérieur métallique (1) est constitué d'un tube en acier.

3. Conduite selon la revendication 1 ou 2, dans laquelle le tube intérieur métallique (1) est un tube roulé simple et soudé bord-à-bord par cordon longitudinal.

4. Conduite selon la revendication 1 ou 2, dans laquelle le tube intérieur métallique (1) est un tube roulé double brasé périphériquement.

5. Conduite selon l'une des revendications 1 à 4, dans laquelle le tube intérieur métallique (1) présente une épaisseur de paroi de 0,2 à 8 mm, de préférence de 0,4 à 1,5 mm.

6. Conduite selon l'une des revendications 1 à 5, dans laquelle le revêtement d'aluminium (2) présente une épaisseur de 100 à 140 µm.

7. Conduite selon l'une des revendications 1 à 6, dans laquelle la couche de polyamide 12 (5) est rendue conductrice par des additifs de conductivité.

8. Conduite selon l'une des revendications 1 à 7, dans laquelle la couche de polyamide 12 (5) présente une épaisseur de 50 à 200 µm, de préférence de 100 à 140 µm.

9. Conduite selon l'une des revendications 1 à 8, dans laquelle la couche de traitement de surface sans chrome (3) est constituée d'un revêtement par phosphatage.

10. Conduite selon l'une des revendications 1 à 9, dans laquelle la couche de traitement de surface sans chrome (3) présente une épaisseur de 0,2 à 0,8 µm, de préférence inférieure à 0,5 µm.

11. Conduite selon l'une des revendications 1 à 10, dans laquelle le revêtement primaire (4) présente une épaisseur de 1 à 8 µm, de préférence de 3 à 5 µm.

12. Conduite selon l'une des revendications 1 à 11, dans laquelle une couche de protection en un élastomère thermoplastique ou un polypropylène est appliquée sur le côté extérieure de la couche de polyamide 12 (5).

13. Conduite selon la revendication 12, dans laquelle la couche de protection présente une épaisseur de 1 à 3 mm, de préférence de 1,5 à 2 mm.
